# EUROPEAN PATENT SPECIFICATION

(11) **EP 3 431 453 B1**
(45) Date of publication and mention of the grant of the patent: **27.12.2023**
(21) Application number: 18174984.7
(22) Date of filing: 30.05.2018
(51) Int. Cl.: C03C 3/068, C03C 4/00

(54) **HEAVY-LANTHANUM FLINT OPTICAL GLASS**
OPTISCHES GLAS AUS LANTHANREICHEM FEUERSTEIN
VERRE OPTIQUE DE TYPE FLINT À HAUTE TENEUR EN LANTHANE

(30) Priority: 03.07.2017 CN 201710534017
(43) Date of publication of application: 23.01.2019
(73) Proprietor: CDGM Glass Co. Ltd., Chengdu, Sichuan 610100 (CN)
(72) Inventor: MAO, Lulu, Chengdu, Sichuan 600100 (CN); KUANG, Bo, Chengdu, Sichuan 610100 (CN); HAO, Liangzhen, Chengdu, Sichuan 610100 (CN)
(74) Representative: Ipside

(56) References cited:
- US-A- 4 390 638
- US-A1- 2009 314 033
- DATABASE WPI Week 201269 Thomson Scientific, London, GB; AN 2012-M84666 XP002786837, -& WO 2012/133421 A1 (OHARA KK) 4 October 2012 (2012-10-04)
- DATABASE WPI Week 201313 Thomson Scientific, London, GB; AN 2013-B88824 XP002786838, -& WO 2013/018586 A1 (OHARA KK) 7 February 2013 (2013-02-07)

## Description

### Technical Field

The present invention relates to a high refractive index optical glass, in particular to a heavy-lanthanum flint optical glass having a refractive index of 1.82-1.87 and an abbe number of 28-32, which can be produced using a ceramic platinum continuous smelting process, has a high transmittance in the blue light band, and has a better crystallisation resistance during reheating and moulding same.

### Background Art

In the prior art, a glass having a refractive index of 1.82-1.87 and an abbe number of 28-32 is a high refractive index heavy-lanthanum flint glass, and generally, B₂O₃(SiO₂)-La₂O₃-TiO₂-RO glass systems (R refers to Mg, Ca, Sr, or Ba) are used, in the composition of which the contents of B₂O₃ and La₂O₃ are higher, e.g., glasses as described in CN 3149039.5, CN 200810081055.4 and US 5288669 (A). A glass of this system has a very low viscosity in the molten state and generally has a viscosity of less than 1.0 dpas at a temperature of 1200°C. In addition, because of its extremely strong corrosiveness to the materials of fused zirconia corundum bricks, such as quartz, fused zirconia alumina, a continuous ceramic platinum smelting production method involving one-step melting cannot be used during production, because in the continuous glass smelting production line, a melting tank therein is made of quartz or fused zirconia alumina.

During production, the above-mentioned glass is generally produced in the entire process using a platinum crucible, and the production method therefore involves: smelting well-mixed glass raw materials into molten glass using a platinum glass crucible, then pouring the molten glass into glass slag, after the glass slag is cooled, proportioning the glass slag, and placing the glass slag in a continuous smelting line consisting of all platinum to manufacture an acceptable product. Compared with the continuous ceramic platinum smelting production method involving one-step melting, it has the following defects: 1) the production process requires melting materials twice, wherein in the first melting, a glass powder is melted into molten glass in a platinum crucible and is then poured into glass slag, and in the second melting, the glass slag is melted into molten glass in a continuous smelting platinum melting tank, the energy consumption being about 30% higher than that of the one-step melting; 2) during the production of the optical glass, the corrosiveness of the glass to platinum is the strongest during the melting stage, and particularly during melting the powder into molten glass, a large amount of platinum ions enter the glass, which will lead to a sharp decrease in the transmittance of the glass in the ultraviolet-blue light band; and 3) comparing the all-platinum production of glass involving two-step melting with the continuous ceramic platinum smelting production of glass involving one-step melting, the amount of platinum used for producing 1 kg of the product of the former is about 40% higher than that of the latter, and the procedures of the classification, storage, and testing of the glass slag, etc., and costs are significantly increased. For example, the capacity of an all-platinum two-step melting production line is about 1000 kg/day, and the amount of platinum is 120 kg. The capacity of a ceramic platinum one-step melting production line is about 1500-2000 kg/day, and the amount of platinum is about 90 kg.

In addition, the B₂O₃(SiO₂)-La₂O₃-TiO₂-RO system glass exhibits a poorer crystallisation resistance during reheating and moulding, and there is a complete crystallisation on the surface during testing regarding maintaining the temperature at Tg + 230°C for 30 minutes. This limits the use of this type of glass in applications that require long-time plastic operations near the softening point, e.g., in drawing optical fibres, and repeatedly reheating and moulding complex parts.

Background of the art for the present invention may be found in the international patent application WO 2012/133421A1 published on October 4th 2012, the United States patent application US 4 390 638 A published on June 28th 1983, the international patent application WO 2013/018586A1 published on February 13th 2013, and the United States patent application US 2009/314033 A1 published on December 24th 2009.

### Summary of the Invention

The technical problem to be solved by the present invention is to provide a heavy-lanthanum flint optical glass having a refractive index of 1.82-1.87 and an abbe number of 28-32, satisfying ceramic furnace one-step melting production and showing no obvious crystallisation on the surface after the glass is maintained at a temperature of Tg + 230°C for 30 minutes.

The invention is described in the attached set of claims.

The technical solution used in the present invention to solve the technical problems is as follows: a heavy-lanthanum flint optical glass, the composition of which is expressed in percentage by weight and comprises 15-30% of SiO₂, 5-15% of TiO₂, 9-18% of ZnO, 10-25% of Nb₂O₅, 0.05-1% of Al₂O₃, RO (RO is one or more of 0-5% of MgO, 0-5% of CaO, 0-5% of SrO and 15-35% of BaO), 0.5-5% of B₂O₃, and 2-10% of La₂O₃, wherein (SiO₂ + RO)/(La₂O₃ + B₂O₃) is 4-15; Nb₂O₅/TiO₂ is 1.2-3; TiO₂/(B₂O₃ + Al₂O₃) is 2-20; B₂O₃/ZnO is 0-0.3.

Furthermore, the composition thereof is expressed in percentage by weight and comprises 15-30% of SiO₂; 5-15% of TiO₂; 9-18% of ZnO; 2-9% of ZrO₂; 0.05-1% of Al₂O₃; 10-25% of Nb₂O₅; 15-35% of BaO; 0-5% of SrO; 0-5% of CaO; 0-5% of MgO.

Furthermore, the composition thereof is expressed in percentage by weight and further comprises 0-3% of Rn₂O (Rn₂O is one or more of Na₂O, K₂O and Li₂O); 0-5% of WO₃; 0-5% of Y₂O₃; and 0-1% of Sb₂O₃.

Furthermore, (MgO + SrO + CaO)/BaO is 0-0.3; and (K₂O + Li₂O)/Na₂O is 0-0.6.

There is provided a heavy-lanthanum flint optical glass, the composition of which is expressed in percentage by weight and comprises 15-30% of SiO₂; 0-5% of B₂O₃; 5-15% of TiO₂; 9-18% of ZnO; 2-9% of ZrO₂; 0.05-1% of Al₂O₃; 0-10% of La₂O₃; 10-25% of Nb₂O₅; and 15-35% of BaO.

Furthermore, the composition thereof is expressed in percentage by weight and further comprises 0-5% of SrO; 0-5% of CaO; 0-5% of MgO; 0-3% of Rn₂O (Rn₂O is one or more of Na₂O, K₂O and Li₂O); 0-5% of WO₃; 0-5% of Y₂O₃; and 0-1% of Sb₂O₃.

There is provided a heavy-lanthanum flint optical glass, the composition of which is expressed in percentage by weight and comprises 15-30% of SiO₂; 0-5% of B₂O₃; 5-15% of TiO₂; 9-18% of ZnO; 2-9% of ZrO₂; 0.05-1% of Al₂O₃; 0-10% of La₂O₃; 10-25% of Nb₂O₅; 15-35% of BaO; 0-5% of SrO; 0-5% of CaO; 0-5% of MgO; 0-3% of Rn₂O (Rn₂O is one or more of Na₂O, K₂O and Li₂O); 0-5% of WO₃; 0-5% of Y₂O₃; and 0-1% of Sb₂O₃.

Furthermore, the total content of SiO₂, B₂O₃, TiO₂, ZnO, ZrO₂, Al₂O₃, La₂O₃, Nb₂O₅ and RO (RO is one or more of MgO, CaO, SrO and BaO) is 95% or more.

Furthermore, the composition thereof satisfies one or more of the following 6 conditions:
1) (SiO₂ + RO)/(La₂O₃ + B₂O₃) is 4-15;
2) Nb₂O₅/TiO₂ is 1.2-3;
3) TiO₂/(B₂O₃ + Al₂O₃) is 2-20;
4) B₂O₃/ZnO is 0-0.3;
5) (MgO + SrO + CaO)/BaO is 0-0.3; and
6) (K₂O + Li₂O)/Na₂O is 0-0.6.

Furthermore, the heavy-lanthanum flint optical glass has 17-28% of SiO₂; and/or 0.5-4% of B₂O₃; and/or 7-13% of TiO₂; and/or 10-16% of ZnO; and/or 3-8% of ZrO₂; and/or 0.05-0.8% of Al₂O₃; and/or 2-8% of La₂O₃; and/or 11-24% of Nb₂O₅; and/or 17-30% of BaO; and/or 0-3% of SrO; and/or 0-3% of CaO; and/or 0-3% of MgO; and/or 0-2% of Rn₂O (Rn₂O is one or more of Na₂O, K₂O and Li₂O); and/or 0-3% of WO₃; and/or 0-3% of Y₂O₃; and/or 0-0.5% of Sb₂O₃.

Furthermore, the heavy-lanthanum flint optical glass has 20-26% of SiO₂; and/or 0.7-2% of B₂O₃; and/or 8-12% of TiO₂; and/or 12-14% of ZnO; and/or 4-8% of ZrO₂; and/or 0.05-0.5% of Al₂O₃; and/or 3-7% of La₂O₃; and/or 13-20% of Nb₂O₅; and/or 20-28% of BaO; and/or 0-1% of Rn₂O (Rn₂O is one or more of Na₂O, K₂O and Li₂O).

Furthermore, the heavy-lanthanum flint optical glass has (SiO₂ + RO)/(La₂O₃ + B₂O₃) is 4.5-12; and/or Nb₂O₅/TiO₂ is 1.3-2.5; and/or TiO₂/(B₂O₃ + Al₂O₃) is 3-15; and/or B₂O₃/ZnO is 0.02-0.2; and/or (MgO + SrO + CaO)/BaO is 0-0.2; and/or (K₂O + Li₂O)/Na₂O is 0-0.4.

Furthermore, the heavy-lanthanum flint optical glass has (SiO₂ + RO)/(La₂O₃ + B₂O₃) is 5-10; and/or Nb₂O₅/TiO₂ is 1.3-2; and/or TiO₂/(B₂O₃ + Al₂O₃) is 4-10; and/or B₂O₃/ZnO is 0.05-0.15; and/or (MgO + SrO + CaO)/BaO is 0-0.1; and/or (K₂O + Li₂O)/Na₂O is 0-0.2.

Furthermore, the glass has a refractive index of 1.82-1.87 and an abbe number of 28-32.

Furthermore, the internal transmittance τ400 nm of the glass at a wavelength of 400 nm is greater than or equal to 75%.

There is provided a glass preform manufactured using the above-mentioned optical glass.

There is provided an optical element manufactured using the above-mentioned optical glass.

There is provided an optical instrument manufactured using the above-mentioned optical glass.

The beneficial effects of the present invention are as follows: With a rational component proportion design without adding precious components such as Ta₂O₅, WO₃ and Ga₂O₃ and under the condition of ensuring the desired optical performance criteria, the heavy-lanthanum flint optical glass of the present invention is suitable for the continuous ceramic platinum smelting production involving one-step melting while providing a high transmittance. After the glass of the present invention is maintained at a temperature of Tg + 230°C for 30 minutes in a muffle furnace, there is no obvious crystallisation on the surface, so the glass is particularly suitable for applications that require long-time plastic operations near the softening point.

### Detailed Description of Embodiments

Each component of the glass of the present invention will be described below, and unless otherwise specified, the content of each component is expressed in wt%.

The glass of the present invention is mainly composed of the components of SiO₂, TiO₂, ZnO, Nb₂O₅, RO (RO is one or more of MgO, CaO, SrO and BaO, the same hereinafter), etc., and by using different rational ratios of oxides, an optical glass having a refractive index of 1.82-1.87 and an abbe number of 28-32 is formed; in addition, continuous ceramic platinum smelting production method involving one-step melting can be used, and the raw material cost is lower.

If the glass is required to have a small corrodibility to refractory bricks forming the melting tank at the melting temperature, this requires on the one hand the content of components that have a stronger corrodibility to the refractory bricks in the composition of the glass to be relatively small, and on the other hand the viscosity of the glass at the melting temperature to be higher. Less corrosion of the glass components to the fused zirconia corundum bricks means that the transmittance of the glass will be better, the refractive index and dispersion consistency of the product will be better in the production process, the crystallisation resistance of the glass will be stronger, and the service life of the production line is longer.

With regard the component system of the present invention, SiO₂ and B₂O₃ are glass network formers that serve to build a glass network. La₂O₃ and alkali-earth metal oxides are low-dispersion high-refractive-index oxides that can be added to the glass and serve to increase the refractive index of the glass and adjust the dispersion of the glass. The inventors have found in the study that where the value of (SiO₂ + RO)/(La₂O₃ + B₂O₃) is less than 4, the viscosity of the material during melting is smaller, and the corrosiveness thereof to the fused zirconia corundum bricks of the melting tank increases; in addition, where the value of (SiO₂ + RO)/(La₂O₃ + B₂O₃) is greater than 15, although the corrosiveness of the glass to the fused zirconia corundum bricks decreases, the viscosity of the glass rises rapidly, so requiring a longer melting time, and the degree of corrosion to the fused zirconia corundum bricks during melting is higher; furthermore, the refractive index of the glass fails to meet the design requirements. Therefore, where the value of (SiO₂ + RO)/(La₂O₃ + B₂O₃) is 4-15, preferably 4.5-12, further preferably 5-10, the viscosity of the glass is the most appropriate and the corrosiveness of the glass to fused zirconia corundum bricks is minimized.

In the composition of the invention, Nb₂O₅ and TiO₂ are both high refractive and high dispersion oxides, which helps to increase the refractive index and dispersion of the glass; the inventors have found in the study that where the value of Nb₂O₅/TiO₂ is greater than 3, the crystallisation resistance of the glass decreases, and crystal nuclei are easily produced or even crystals are precipitated during draining, and the raw material cost of the glass is rapidly increased; and where the value of Nb₂O₅/TiO₂ is less than 1.2, the transmittance, the crystallisation resistance, and the stability of the glass will be reduced. Therefore, where the value of Nb₂O₅/TiO₂ is 1.2-3, preferably 1.3-2.5, and further preferably 1.3-2, the transmittance, stability and crystallisation resistance of the glass and the raw material cost are the most balanced.

TiO₂, B₂O₃ and Al₂O₃ in the glass all have the ability to produce oxides with structures varying depending on changes in the surrounding structure, and when the structures thereof change, the properties of the glass also change greatly. The properties are, for example, refractive index, dispersion, transmittance, crystallisation resistance, glass stability and corrosiveness to fused zirconia corundum bricks. The inventors have found in the study that where the value of TiO₂/(B₂O₃ + Al₂O₃) is greater than 20, the transmittance and the crystallisation resistance of the glass will be reduced; and where the value of TiO₂/(B₂O₃ + Al₂O₃) is less than 2, the corrosiveness of the glass to the fused zirconia corundum bricks increases, the transmittance and stability thereof will be reduced, and the refractive index and dispersion thereof fail to meet the design requirements. Therefore, where the value of TiO₂/(B₂O₃ + Al₂O₃) is 2-20, preferably 3-15, further preferably 4-10, the transmittance, stability, crystallisation resistance, and corrosiveness to the fused zirconia corundum bricks of the glass are the most balanced.

The relative contents of B₂O₃ and ZnO have a great influence on the refractive index, dispersion, transmittance, high temperature viscosity, crystallisation resistance, and stability of the glass. Where the value of B₂O₃/ZnO is greater than 0.3, the crystallisation resistance of the glass decreases, the melting temperature of the glass raw materials increases, the transmittance of the glass decreases, and the stability of the glass sharply decreases. Therefore, where the value of B₂O₃/ZnO is 0-0.3, preferably 0.02-0.2, and further preferably 0.05-0.15, the refractive index and dispersion of the glass can meet the design requirements, the transmittance, high temperature viscosity, crystallisation resistance, and stability of the glass are the most balanced.

In the present invention, the addition of an appropriate alkali-earth metal oxide can enhance the stability of the glass, improves the crystallisation resistance of the glass, and adjusts the refractive index and dispersion of the glass. The inventors have found in the study that the functions and contents of MgO, SrO, CaO and BaO also as alkali-earth metal oxides in the glass are still different.

If the content of MgO exceeds 5%, the crystallization resistance and stability of the glass decrease, and the refractive index of the glass does not meet the design requirements. Therefore, the content thereof is 0-5%, preferably 0-3%, and further preferably not added.

If the content of SrO exceeds 5%, the crystallisation resistance of the glass decreases, and the raw material cost of the glass increases rapidly; therefore, the content thereof is 0-5%, preferably 0-3%, and further preferably not added.

CaO can replace part of BaO, reducing the density and high temperature viscosity of the glass; however, if the content thereof exceeds 5%, the crystallisation resistance of the glass will decrease. Therefore, the content thereof is 0-5%, preferably 0-3%, and further preferably not added.

BaO is the most important additive component among the alkali-earth metal oxides in the present invention, which can adjust the refractive index of the glass, increase the stability of the glass, enhance the crystallisation resistance of the glass, and increase the transmittance of the glass; if the content thereof is less than 15%, the refractive index and dispersion of the glass cannot meet the design requirements, the transmittance of the glass will decrease, and the stability of the glass will also decrease; and if the content thereof exceeds 35%, the density of the glass increases and the crystallisation resistance of the glass decreases. Therefore, the content thereof is 15-35%, preferably 17-30%, and further preferably 20-28%.

The inventors have found in the study that the above-mentioned four alkali-earth metal oxides can be mixed together; and where the value of (MgO + SrO + CaO)/BaO is satisfied to be 0-0.3, preferably 0-0.2, and further preferably 0-0.1, the stability, crystallisation resistance, high temperature viscosity, and transmittance of the glass and the raw material cost of the glass are the most balanced.

In the present invention, the main purpose of adding a small amount of alkali earth oxide is to enhance the melting properties of the raw material. Electrodes are used to energize the raw material in the melting stage of the ceramic platinum continuous smelting, and the greater the conductivity of the raw material, the faster the melting rate of the glass at the same temperature, such that the corrosion to the fused zirconia corundum bricks can be reduced. In addition, a small amount of alkali metal oxide can increase the transmittance of the glass, especially in the presence of both TiO₂ and Al₂O₃ components. However, the addition of an alkali metal oxide in an total amount exceeding 3% can cause the crystallisation resistance and stability of the glass to sharply decrease, and therefore the amount of Rn₂O (Rn₂O is one or more of Na₂O, K₂O and Li₂O) is 0-3%, preferably 0-2%, and further preferably 0-1%.

It is found through further study that in the glass system of the present invention, the best substance that can reduce the corrosion of the molten glass to the fused zirconia corundum bricks while improving the crystallisation resistance is Na₂O, Li₂O is second thereto, and K₂O is third thereto. In addition, where two or three of these three alkali metal oxides are added simultaneously and the value of (K₂O + Li₂O)/Na₂O is satisfied to be 0-0.6, preferably 0-0.4, further preferably 0-0.2, the effect thereof on the conductive effect of the raw material is the best, and the degree of corrosion thereof on the fused zirconia corundum bricks and the damage thereof to the crystallisation resistance of the glass are minimized; in summary, where two or three of these three alkali metal oxides are added simultaneously, the effect thereof is better than the effect of the addition of one alkali metal oxide alone.

SiO₂ is a network former of the glass and constitutes the main component of the framework of the glass. The content of SiO₂ is closely related to the viscosity, crystallisation resistance, transmittance, refractive index, and dispersion of the glass. If the content thereof is less than 15%, the refractive index and dispersion of the glass cannot meet the design expectations, the erosion of the glass to the fused zirconia corundum bricks increases while the crystallisation resistance and transmittance of the glass can be greatly reduced; and if the content thereof is greater than 30%, the melting properties of the glass will decrease, the melting temperature will increase, and the erosion thereof to the fused zirconia corundum bricks will increase while the crystallisation resistance of the glass will decrease and the refractive index and dispersion thereof cannot meet the design expectations. Therefore, in the present invention, the content of SiO₂ is 15-30%, preferably 17-28%, and further preferably 20-26%.

B₂O₃ is also one of the glass formers, the addition of an appropriate amount of B₂O₃ in such glass can make the framework structure of the glass denser and improve the melting properties of the glass. If the content of B₂O₃ is greater than 5%, the erosion of the glass to the fused zirconia corundum bricks will aggravate, and the transmittance of the glass will decrease. Therefore, the content of B₂O₃ in the present invention is 0-5%. However, if the composition of the glass does not comprise B₂O₃, although a better transmittance can be maintained, the high temperature viscosity of the glass raw material will drastically increase during melting, causing the molten glass to overflow a feed tank, thereby seriously affecting the refractive index and dispersion stability of the glass. Therefore, from the viewpoint of optimising the production process, the content of B₂O₃ is preferably 0.5-4%, further preferably 0.7-2%.

Nb₂O₅ is a high refractive index and high dispersion oxide; the addition thereof to the glass can increase the refractive index and dispersion of the glass, and especially where the glass contains a large amount of TiO₂ component, the addition of Nb₂O₅ can enhance the crystallisation resistance of the glass and improve the transmittance of the glass. If the content thereof is less than 10%, the refractive index and abbe number of the glass cannot meet the design requirements, and the transmittance of the glass will decrease at the same time; and if the content thereof is greater than 25%, the refractive index and dispersion of the glass do not meet the design requirements, and more importantly, the stability and crystallisation resistance of the glass will drastically decrease, while the cost will increase rapidly. Therefore, the content of Nb₂O₅ is limited to 10-25%, preferably 11-24%, further preferably 13-20%.

WO₃ may be added in a small amount to replace part of Nb₂O₅; however, if the content thereof exceeds 5%, the transmittance of the glass will decrease; therefore, the content thereof is limited to 0-5%, preferably 0-3%, and further preferably not added.

TiO₂ is a high refractive index and high dispersion oxide, and the addition thereof to the glass can increase the refractive index and dispersion of the glass. In addition, an appropriate amount of TiO₂ added to the glass can enter the network of the glass and become part of the network of the glass, increasing the stability of the glass, especially the crystallisation resistance of the glass. The addition of TiO₂ into the glass can reduce the use amount of Nb₂O₅ which has a relatively high price, reducing the raw material cost of the glass. However, if too much TiO₂ is added to the glass, especially to the glass of the present invention in which SiO₂ mainly acts as a network former, the refractive index and dispersion of the glass will be higher than the design expectations, the transmittance thereof will drastically deteriorate, and the stability, especially crystallisation resistance, of the glass will drastically deteriorate. If TiO₂ is too less, the refractive index and dispersion of the glass will be lower than the design expectations, and the crystallisation resistance of the glass will decrease. Therefore, the content of TiO₂ is set to be 5-15%, preferably 7-13%, and further preferably 8-12%.

La₂O₃ is a high-refractive and low-dispersion oxide, the addition thereof to the glass can increase the refractive index of the glass and adjust the dispersion thereof, reduce the high temperature viscosity of the glass, and can replace part of Nb₂O₅ to reduce the raw material cost of the glass. If the content thereof is greater than 10%, the crystallisation resistance of the glass will deteriorate rapidly, and most importantly, the fused zirconia corundum bricks of the feed tank will be seriously corroded. Therefore, the content of La₂O₃ is 0-10%, preferably 2-8%, further preferably 3-7%.

Y₂O₃ is a high-refractive and low-dispersion oxide that can replace part of the La₂O₃ and Nb₂O₅ components to adjust the refractive index of the glass and improve the crystallisation resistance of the glass. If the content thereof exceeds 5%, the crystallisation resistance of the glass will decrease, and therefore the content thereof is limited to 0-5%, preferably 0-3%, and further preferably not added.

ZrO₂ is a high-refractive index and low-dispersion oxide, and the addition thereof to the glass can increase the refractive index of the glass and adjust the dispersion of the glass, improve the crystallisation resistance and glass-forming stability of the glass, and can reduce the erosion of the molten glass to the fused zirconia corundum bricks. In the present invention, if the content thereof is less than 2%, the protection of the fused zirconia corundum bricks is not obvious, and the crystallisation resistance and glass-forming stability of the glass are not obviously improved at same time; and if the content thereof is greater than 9%, the glass will become difficult to melt, the smelting temperature will increase, and the corrosion to the fused zirconia corundum bricks will be exacerbated, further causing inclusions to appear inside the glass and lowering of the transmittance of the glass. Therefore, the content of ZrO₂ is 2-9%, preferably 3-8%, and further preferably 4-8%.

In the glass system of the present invention, Al₂O₃, especially when coexisting with B₂O₃ and TiO₂, is disadvantageous to the improvement of the transmittance and crystallisation resistance of the glass; however, the design objective of the glass of the present invention is to be suitable for continuous ceramic platinum smelting production, and the fused zirconia corundum brick contains 30-40% by weight of the Al₂O₃ component. The inventors have found in the study that if Al₂O₃ is not added, a large concentration gradient will be generated between the molten glass and the fused zirconia corundum bricks while the glass is melting, resulting in a sharp increase in corrosiveness. In the present invention, if the content of Al₂O₃ is less than 0.05%, the corrosiveness of the molten glass to the fused alumina corundum bricks increases drastically; and if the content thereof is greater than 1%, the transmittance and crystallisation resistance of the glass decrease drastically. Therefore, the content of Al₂O₃ is limited to 0.05-1%, preferably 0.05-0.8%, further preferably 0.05-0.5%.

The addition of ZnO to the glass of the present invention can adjust the refractive index and dispersion of the glass, and improve the crystallisation resistance and stability of the glass. ZnO can also lower the high temperature viscosity of the glass, so that the glass can be smelted at a lower temperature, which can thus increase the transmittance of the glass. In the glass system of the present invention, if the content of ZnO is less than 9%, the effects of increasing the crystallisation resistance of the glass, enhancing the stability of the glass and lowering the high temperature viscosity of the glass are not obvious; and if the content thereof is greater than 18%, the stability of the glass decreases, and the crystallisation resistance of the glass during moulding and processing deteriorates drastically. Therefore, the content of ZnO is limited to 9-18%, preferably 10-16%, and further preferably 12-14%.

Sb₂O₃ is a clarifying agent, and the addition thereof to the glass makes it easier to eliminate bubbles. In the present invention, the content thereof is limited to 0-1%, preferably 0-0.5%, and further preferably not added.

In order to better achieve the objective of the present invention, the total content of SiO₂, B₂O₃, TiO₂, ZnO, ZrO₂, Al₂O₃, La₂O₃, Nb₂O₅ and RO (RO is one or more of MgO, CaO, SrO and BaO) in the composition of the heavy-lanthanum flint optical glass of the present invention is 95% or more, more preferably 98% or more.

The properties of the optical glass of the present invention will be described below:
The refractive index and the abbe number are measured according to the methods specified in GB/T 7962.1-2010.

The internal transmittance of a 10 mm-thick sample at a wavelength of 400 nm is measured according to the method specified in GB/T 7962.12-2010.

The method for measuring the crystallisation resistance of the glass involves: cutting a glass sample into a size of 20 × 20 × 10 mm, placing same into a muffle furnace at a temperature of Tg + 230°C and maintaining the glass at the temperature for 30 minutes, taking out the glass and placing same into heat insulation cotton for slow cooling, and after cooling, observing the crystallisation condition on the surface.

After testing, the optical glass of the present invention has the following properties: a refractive index (nd) of 1.82-1.87, preferably 1.83-1.86, more preferably 1.84-1.86; an abbe number (vd) of 28-32, preferably 29-31; an internal transmittance at a wavelength of 400 nm (τ400 nm) of greater than or equal to 70%, preferably greater than or equal to 75%, more preferably greater than or equal to 78%, further preferably greater than or equal to 80%; and no obvious crystallisation on the surface after cutting a glass sample into a size of 20 × 20 × 10 mm, placing same into a muffle furnace at a temperature of Tg + 230°C and maintaining the glass at the temperature for 30 minutes, and taking out the glass and placing same into heat insulation cotton for slow cooling, such that the glass is suitable for continuous ceramic platinum smelting production.

In order to further understand the technical solution of the present invention, examples of the optical glass of the present invention will be described below. It should be noted that these examples do not limit the scope of the present invention.

The optical glasses shown in Tables 1 and 2 (Examples 1-20) are prepared by weighing and mixing common raw materials for optical glass (e.g., oxides, hydroxides, carbonates and nitrates) according to the percentages in the respective examples shown in Tables 1 and 2, placing the mixed material in a platinum crucible, melting same at 1350-1400°C for 2.5-4 hours, and performing clarification, stirring and homogenisation to obtain a homogeneous molten glass free from bubbles and undissolved substances, and casting and annealing this molten glass in a mould.

The compositions of Examples 1-20 of the present invention and the refractive index (nd), abbe number (vd), internal transmittance at a wavelength of 400 nm (τ400 nm), and crystallisation properties when the sample is cut into a size of 20 × 20 × 10 mm, etc., of the examples are as shown below, wherein the value of (SiO₂ + RO)/(La₂O₃ + B₂O₃) is K1, the value of Nb₂O₅/TiO₂ is K2, the value of TiO₂/(B₂O₃ + Al₂O₃) is K3, the value of B₂O₃/ZnO is K4, the value of (MgO + SrO + CaO)/BaO is K5, the value of Rn₂O (Rn₂O is one or more of Na₂O, K₂O and Li₂O) is K6, the value of (K₂O + Li₂O)/Na₂O is K7, and the crystallisation condition on the surface as observed, expressed as K8, after cutting the glass into a size of 20 × 20 × 10 mm, placing same into a muffle furnace at a temperature of Tg + 230°C and maintaining the glass at the temperature for 30 minutes, taking out the glass and placing same into heat insulation cotton for slow cooling. No obvious crystallization is recorded as "A", and obvious crystallisation is recorded as "B".

**Table 1**

| Example | | | | | | | | | | |
|---|---|---|---|---|---|---|---|---|---|---|
| wt% | 1 | 2 | 3 | 4 | 5 | 6 | 7 | 8 | 9 | 10 |
| SiO₂ | 22.40 | 20.00 | 21.40 | 22.90 | 23.50 | 22.80 | 21.50 | 23.50 | 21.50 | 20.90 |
| B₂O₃ | 1.20 | 3.00 | 1.50 | 1.00 | 0.50 | 1.00 | 1.00 | 1.50 | 1.00 | 1.20 |
| TiO₂ | 9.20 | 11.00 | 10.20 | 10.30 | 10.30 | 10.00 | 9.50 | 8.50 | 10.00 | 9.30 |
| ZnO | 13.50 | 13.00 | 13.30 | 13.40 | 13.40 | 13.40 | 13.50 | 12.00 | 13.50 | 13.50 |
| La₂O₃ | 6.30 | 6.00 | 9.90 | 6.00 | 6.00 | 5.00 | 6.40 | 5.00 | 6.40 | 8.20 |
| Y₂O₃ | 0.00 | 0.00 | 0.00 | 0.00 | 0.00 | 1.00 | 1.00 | 2.00 | 0.00 | 0.00 |
| Al₂O₃ | 0.10 | 0.20 | 0.10 | 0.20 | 0.10 | 0.40 | 0.30 | 0.30 | 0.20 | 0.20 |
| ZrO₂ | 6.00 | 5.70 | 6.00 | 5.80 | 6.00 | 5.60 | 5.10 | 4.80 | 6.00 | 5.00 |
| Nb₂O₅ | 15.00 | 16.00 | 12.30 | 14.80 | 14.80 | 13.80 | 12.80 | 10.00 | 14.60 | 15.00 |
| WO₃ | 0.00 | 0.00 | 0.00 | 0.00 | 0.00 | 1.00 | 1.00 | 1.00 | 0.00 | 0.00 |
| BaO | 26.00 | 24.80 | 22.30 | 25.30 | 22.00 | 25.50 | 24.00 | 26.40 | 26.00 | 23.00 |
| CaO | 0.00 | 0.00 | 1.00 | 0.00 | 1.00 | 0.00 | 1.00 | 1.00 | 0.00 | 1.00 |
| MgO | 0.00 | 0.00 | 0.00 | 0.00 | 1.00 | 0.00 | 0.00 | 1.00 | 0.00 | 0.00 |
| SrO | 0.00 | 0.00 | 1.50 | 0.00 | 1.00 | 0.00 | 1.00 | 1.00 | 0.00 | 1.00 |
| Na2O | 0.30 | 0.25 | 0.40 | 0.30 | 0.25 | 0.40 | 1.60 | 1.50 | 0.70 | 1.50 |
| K2O | 0.00 | 0.05 | 0.05 | 0.00 | 0.10 | 0.00 | 0.20 | 0.20 | 0.10 | 0.10 |
| Li2O | 0.00 | 0.00 | 0.05 | 0.00 | 0.05 | 0.10 | 0.10 | 0.20 | 0.00 | 0.10 |
| Sb2O3 | 0.00 | 0.00 | 0.00 | 0.00 | 0.00 | 0.00 | 0.00 | 0.10 | 0.00 | 0.00 |
| Total | 100.00 | 100.00 | 100.00 | 100.00 | 100.00 | 100.00 | 100.00 | 100.00 | 100.00 | 100.00 |
| K1 | 6.45 | 4.98 | 4.05 | 6.89 | 7.46 | 8.05 | 6.42 | 8.14 | 6.42 | 4.88 |
| K2 | 1.63 | 1.45 | 1.21 | 1.44 | 1.44 | 1.38 | 1.35 | 1.18 | 1.46 | 1.61 |
| K3 | 7.08 | 3.44 | 6.38 | 8.58 | 17.17 | 7.14 | 7.31 | 4.72 | 8.33 | 6.64 |
| K4 | 0.09 | 0.23 | 0.11 | 0.07 | 0.04 | 0.07 | 0.07 | 0.13 | 0.07 | 0.09 |
| K5 | 0.00 | 0.00 | 0.11 | 0.00 | 0.14 | 0.00 | 0.08 | 0.11 | 0.00 | 0.09 |
| K6 | 0.30 | 0.30 | 0.50 | 0.30 | 0.40 | 0.50 | 1.90 | 1.90 | 0.80 | 1.70 |
| K7 | 0.00 | 0.20 | 0.25 | 0.00 | 0.60 | 0.25 | 0.19 | 0.27 | 0.14 | 0.13 |
| nd | 1.8509 0 | 1.8665 2 | 1.8548 5 | 1.8540 0 | 1.8549 0 | 1.8501 5 | 1.8444 0 | 1.8217 5 | 1.8498 9 | 1.8465 3 |
| Vd | 30.12 | 29.00 | 30.64 | 29.61 | 29.50 | 29.90 | 30.30 | 31.94 | 29.75 | 30.40 |
| Tg | 702 | 690 | 680 | 690 | 710 | 700 | 680 | 675 | 695 | 685 |
| τ400 nm (%) | 80.1 | 78.1 | 78.3 | 79.2 | 78.9 | 80.1 | 81.0 | 82.1 | 79.9 | 80.1 |
| K8 | A | A | A | A | A | A | A | A. | A | A |

**Table 2**

| Example | | | | | | | | | | |
|---|---|---|---|---|---|---|---|---|---|---|
| wt% | 11 | 12 | 13 | 14 | 15 | 16 | 17 | 18 | 19 | 20 |
| SiO₂ | 21.80 | 20.50 | 21.00 | 22.20 | 22.40 | 21.00 | 22.70 | 21.50 | 21.70 | 22.00 |
| B₂O₃ | 0.90 | 2.00 | 1.50 | 1.00 | 0.80 | 1.50 | 1.30 | 0.70 | 2.90 | 0.80 |
| TiO₂ | 9.20 | 9.00 | 9.50 | 8.60 | 9.60 | 9.50 | 10.30 | 10.10 | 11.00 | 9.20 |
| ZnO | 13.50 | 14.00 | 13.50 | 12.50 | 13.80 | 13.50 | 14.40 | 14.50 | 10.30 | 13.80 |
| La₂O₃ | 6.00 | 3.00 | 6.50 | 7.40 | 6.00 | 6.50 | 5.00 | 5.40 | 6.00 | 5.60 |
| Y₂O₃ | 0.00 | 0.00 | 0.00 | 1.00 | 0.00 | 0.50 | 0.00 | 0.00 | 0.00 | 0.00 |
| Al₂O₃ | 0.20 | 0.10 | 0.20 | 0.30 | 0.20 | 0.20 | 0.10 | 0.10 | 0.10 | 0.20 |
| ZrO₂ | 5.80 | 8.00 | 5.00 | 5.00 | 4.50 | 5.00 | 7.00 | 5.00 | 5.00 | 6.00 |
| Nb₂O₅ | 14.80 | 18.00 | 15.40 | 15.20 | 15.20 | 15.00 | 13.80 | 14.70 | 14.00 | 14.80 |
| WO₃ | 0.50 | 0.00 | 0.00 | 0.00 | 0.00 | 0.30 | 0.50 | 0.00 | 0.00 | 0.00 |
| BaO | 27.00 | 21.10 | 26.00 | 24.00 | 26.90 | 26.30 | 24.60 | 25.50 | 28.00 | 26.00 |
| CaO | 0.00 | 1.00 | 0.00 | 0.10 | 0.00 | 0.00 | 0.00 | 0.50 | 0.00 | 0.00 |
| MgO | 0.00 | 1.00 | 0.00 | 1.00 | 0.00 | 0.00 | 0.00 | 0.00 | 0.00 | 0.00 |
| SrO | 0.00 | 1.00 | 0.00 | 1.00 | 0.00 | 0.00 | 0.00 | 0.00 | 0.00 | 0.00 |
| Na₂O | 0.30 | 1.10 | 1.40 | 0.50 | 0.50 | 0.50 | 0.30 | 1.80 | 0.90 | 1.30 |
| K₂O | 0.00 | 0.10 | 0.00 | 0.10 | 0.10 | 0.10 | 0.00 | 0.10 | 0.10 | 0.20 |
| Li₂O | 0.00 | 0.10 | 0.00 | 0.10 | 0.00 | 0.10 | 0.00 | 0.10 | 0.00 | 0.10 |
| Sb₂O₃ | 0.00 | 0.00 | 0.00 | 0.00 | 0.00 | 0.00 | 0.00 | 0.00 | 0.00 | 0.00 |
| Total | 100.00 | 100.00 | 100.00 | 100.00 | 100.00 | 100.00 | 100.00 | 100.00 | 100.00 | 100.00 |
| K1 | 7.07 | 8.92 | 5.88 | 5.75 | 7.25 | 5.91 | 7.51 | 7.79 | 5.58 | 7.50 |
| K2 | 1.61 | 2.00 | 1.62 | 1.77 | 1.58 | 1.58 | 1.34 | 1.46 | 1.27 | 1.61 |
| K3 | 8.36 | 4.29 | 5.59 | 6.62 | 9.60 | 5.59 | 7.36 | 12.63 | 3.67 | 9.20 |
| K4 | 0.07 | 0.14 | 0.11 | 0.08 | 0.06 | 0.11 | 0.09 | 0.05 | 0.28 | 0.06 |
| K5 | 000 | 0.14 | 0.00 | 0.09 | 0.00 | 0.00 | 0.00 | 0.02 | 0.00 | 0.00 |
| K6 | 0.30 | 1.30 | 1.40 | 0.70 | 0.60 | 0.70 | 0.30 | 2.00 | 1.00 | 1.60 |
| K7 | 0.00 | 0.18 | 0.00 | 0.40 | 0.20 | 0.40 | 0.00 | 0.11 | 0.11 | 0.23 |
| MgO | 0.00 | 0.00 | 0.00 | 0.00 | 1.00 | 0.00 | 0.00 | 1.00 | 0.00 | 0.00 |
| SrO | 0.00 | 0.00 | 1.50 | 0.00 | 1.00 | 0.00 | 1.00 | 1.00 | 0.00 | 1.00 |
| Na2O | 0.30 | 0.25 | 0.40 | 0.30 | 0.25 | 0.40 | 1.60 | 1.50 | 0.70 | 1.50 |
| K2O | 0.00 | 0.05 | 0.05 | 0.00 | 0.10 | 0.00 | 0.20 | 0.20 | 0.10 | 0.10 |
| Li2O | 0.00 | 0.00 | 0.05 | 0.00 | 0.05 | 0.10 | 0.10 | 0.20 | 0.00 | 0.10 |
| Sb2O3 | 0.00 | 0.00 | 0.00 | 0.00 | 0.00 | 0.00 | 0.00 | 0.10 | 0.00 | 0.00 |
| Total | 100.00 | 100.00 | 100.00 | 100.00 | 100.00 | 100.00 | 100.00 | 100.00 | 100.00 | 100.00 |
| K1 | 6.45 | 4.98 | 4.05 | 6.89 | 7.46 | 8.05 | 6.42 | 8.14 | 6.42 | 4.88 |
| K2 | 1.63 | 1.45 | 1.21 | 1.44 | 1.44 | 1.38 | 1.35 | 1.18 | 1.46 | 1.61 |
| K3 | 7.08 | 3.44 | 6.38 | 8.58 | 17.17 | 7.14 | 7.31 | 4.72 | 8.33 | 6.64 |
| K4 | 0.09 | 0.23 | 0.11 | 0.07 | 0.04 | 0.07 | 0.07 | 0.13 | 0.07 | 0.09 |
| K5 | 0.00 | 0.00 | 0.11 | 0.00 | 0.14 | 0.00 | 0.08 | 0.11 | 0.00 | 0.09 |
| K6 | 0.30 | 0.30 | 0.50 | 0.30 | 0.40 | 0.50 | 1.90 | 1.90 | 0.80 | 1.70 |
| K7 | 0.00 | 0.20 | 0.25 | 0.00 | 0.60 | 0.25 | 0.19 | 0.27 | 0.14 | 0.13 |
| nd | 1.8509 0 | 1.8665 2 | 1.8548 5 | 1.8540 0 | 1.8549 0 | 1.8501 5 | 1.8444 0 | 1.8217 5 | 1.8498 9 | 1.8465 3 |
| Vd | 30.12 | 29.00 | 30.64 | 29.61 | 29.50 | 29.90 | 30.30 | 31.94 | 29.75 | 30.40 |
| Tg | 702 | 690 | 680 | 690 | 710 | 700 | 680 | 675 | 695 | 685 |
| τ400 nm (%) | 80.1 | 78.1 | 78.3 | 79.2 | 78.9 | 80.1 | 81.0 | 82.1 | 79.9 | 80.1 |
| K8 | A | A | A | A | A | A | A | A. | A | A |

### [Optical preform example]

The optical glasses obtained in Examples 1-10 in Table 1 are cut into a predetermined size, and then coated with a release agent evenly on the surface, and then the optical glasses are heated, softened, and pressure-moulded to manufacture preforms of various lenses and prisms such as a concave meniscus lens, a convex meniscus lenses, a biconvex lens, a biconcave lens, a plano-convex lenses and a plano-concave lenses.

### [Optical element example]

The preforms obtained in the above-mentioned optical preform example are annealed, and finely adjusted while reducing distortions inside the glasses, such that the optical characteristics such as refractive index reach the desired values.

Next, these preforms are abraded and ground to manufacture various lenses and prisms such as a concave meniscus lens, a convex meniscus lenses, a biconvex lens, a biconcave lens, a plano-convex lenses and a plano-concave lenses. The surface of the resulting optical elements may be further coated with an antireflection film.

### [Optical instrument example]

The optical elements formed from the heavy-lanthanum flint optical glass of the present invention can be used for various types of optical instruments, and optical components or optical assemblies formed using one or more optical elements can be used for, for example, imaging devices, sensors, microscopes, medical technologies, digital projections, communications, optical communication technologies/information transmission, optics/illuminations in the automobile field, photolithography, steppers, excimer lasers, wafers, computer chips, and integrated circuits and electronic devices comprising such circuits and chips.

## Claims

1. A heavy-lanthanum flint optical glass, **characterized in that** the composition thereof is expressed in percentage by weight and comprises 15-30% of SiO₂, 5-15% of TiO₂, 9-18% of ZnO, 10-25% of Nb₂O₅, 0.05-1% of Al₂O₃, RO which is one or more of 0-5% of MgO, 0-5% of CaO, 0-5% of SrO and 15-35% of BaO; 0.5-5% of B₂O₃, and 2-10% of La₂O₃, wherein (SiO₂+RO)/(La₂O₃+B₂O₃) is 4-15; Nb₂O₅/TiO₂ is 1.2-3; TiO₂/(B₂O₃+Al₂O₃) is 2-20; and B₂O₃/ZnO is 0-0.3.

2. The heavy-lanthanum flint optical glass of claim 1, **characterized in that** the composition thereof is expressed in percentage by weight and comprises 15-30% of SiO₂; 5-15% of TiO₂; 9-18% of ZnO; 2-9% of ZrO₂; 0.05-1% of Al₂O₃; 10-25% of Nb₂O₅; 15-35% of BaO; 0-5% of SrO; 0-5% of CaO; 0-5% of MgO; 0-3% of Rn₂O, Rn₂O being one or more of Na₂O, K₂O and Li₂O; 0-5% of WO₃; 0-5% of Y₂O₃; and 0-1% of Sb₂O₃.

3. The heavy-lanthanum flint optical glass of any one of claims 1 or 2, **characterized in that** (MgO+SrO+CaO)/BaO is 0-0.3; and (K₂O+Li₂O)/Na₂O is 0-0.6.

4. A heavy-lanthanum flint optical glass according to claim 1, **characterized in that** the composition thereof is expressed in percentage by weight and comprises 15-30% of SiO₂; 0.5-4% of B₂O₃; 5-15% of TiO₂; 9-18% of ZnO; 2-9% of ZrO₂; 0.05-1% of Al₂O₃; 2-8% of La₂O₃; 10-25% of Nb₂O₅; and 15-35% of BaO.

5. The heavy-lanthanum flint optical glass of claim 4, **characterized in that** the composition thereof is expressed in percentage by weight and further comprises 0-5% of SrO; 0-5% of CaO; 0-5% of MgO; 0-3% of Rn₂O, Rn₂O being one or more of Na₂O, K₂O and Li₂O; 0-5% of WO₃; 0-5% of Y₂O₃; and 0-1% of Sb₂O₃.

6. The heavy-lanthanum flint optical glass of any one of claims 1-5, **characterized in that** the total content of SiO₂, B₂O₃, TiO₂, ZnO, ZrO₂, Al₂O₃, La₂O₃, Nb₂O₅ and RO, RO being one or more of MgO, CaO, SrO and BaO, is 95% or more.

7. The heavy-lanthanum flint optical glass of any one of claims 4-6, **characterized in that** the composition thereof satisfies one or more of the following 6 conditions:
1) (SiO₂+RO)/(La₂O₃+B₂O₃) is 4-15;
2) Nb₂O₅/TiO₂ is 1.2-3, preferably 1.3-2.5;
3) TiO₂/(B₂O₃+Al₂O₃) is 2-20, preferably 3-15;
4) B₂O₃/ZnO is 0-0.3;
5) (MgO+SrO+CaO)/BaO is 0-0.3,; and
6) (K₂O+Li₂O)/Na₂O is 0-0.6.

8. The heavy-lanthanum flint optical glass of any one of claims 4-6, **characterized in that** the composition thereof satisfies one or more of the following 6 conditions:
1) (SiO₂+RO)/(La₂O₃ +B₂O₃) is 4.5-12;
2) Nb₂O₅/TiO₂ is 1.3-2;
3) TiO₂/(B₂O₃+Al₂O₃) is 3-15;
4) B₂O₃/ZnO is 0.02-0.2;
5) (MgO+SrO+CaO)/BaO is 0-0.2,; and
6) (K₂O+Li₂O)/Na₂O is 0-0.4.

9. The heavy-lanthanum flint optical glass of any one of claims 4-6, **characterized in that** the composition thereof satisfies one or more of the following 5 conditions:
1) (SiO₂+RO)/(La₂O₃+B₂O₃) is 5-10;
2) TiO₂/(B₂O₃+Al₂O₃) is 4-10;
3) B₂O₃/ZnO is 0.05-0.15;
4) (MgO+SrO+ CaO)/BaO is 0-0.1; and
5) (K₂O+Li₂O)/Na₂O is 0-0.2.

10. The heavy-lanthanum flint optical glass of any one of claims 1-6, **characterized in that** the heavy-lanthanum flint optical glass has 17-28% of SiO₂; and/or 0.5-4% of B₂O₃; and/or 7-13% of TiO₂; and/or 10-16% of ZnO; and/or 3-8% of ZrO₂; and/or 0.05-0.8% of Al₂O₃; and/or 2-8% of La₂O₃; and/or 11-24% of Nb₂O₅; and/or 17-30% of BaO; and/or 0-3% of SrO; and/or 0-3% of CaO; and/or 0-3% of MgO; and/or 0-2% of Rn₂O, Rn₂O being one or more of Na₂O, K₂O and Li₂O; and/or 0-3% of WO₃; and/or 0-3% of Y₂O₃; and/or 0-0.5% of Sb₂O₃.

11. The heavy-lanthanum flint optical glass of any one of claims 1-6, **characterized in that** the heavy-lanthanum flint optical glass has 20-26% of SiO₂; and/or 0.7-2% of B₂O₃; and/or 8-12% of TiO₂; and/or 12-14% of ZnO; and/or 4-8% of ZrO₂; and/or 0.05-0.5% of Al₂O₃; and/or 3-7% of La₂O₃; and/or 13-20% of Nb₂O₅; and/or 20-28% of BaO; and/or 0-1% of Rn₂O, Rn₂O being one or more of Na₂O, K₂O and Li₂O.

12. The heavy-lanthanum flint optical glass of any one of claims 1-6, **characterized in that** the glass has a refractive index of 1.82-1.87 and an abbe number of 28-32.

13. The heavy-lanthanum flint optical glass of any one of claims 1-6, **characterized in that** the internal transmittance τ400 nm of the glass at a wavelength of 400 nm is greater than or equal to 75%.

14. A glass preform, **characterized by** being manufactured using the optical glass of any one of claims 1-13.

15. An optical element, **characterized by** being manufactured using the optical glass of any one of claims 1-13.

16. An optical instrument, **characterized by** being manufactured using the optical glass of any one of claims 1-13.

## Patentansprüche

1. Optisches Glas aus schwerem Lanthanflint, **dadurch gekennzeichnet, dass** seine Zusammensetzung in Gewichtsprozent ausgedrückt ist und 15-30 % SiO₂, 5-15 % TiO₂, 9-18 % ZnO, 10-25 % Nb₂O₅, 0,05-1 % A1₂O₃, RO, RO, das eines oder mehrere von 0-5 % MgO, 0-5 % CaO, 0-5 % SrO und 15-35 % BaO ist, umfasst; 0,5-5 % B₂O₃, und 2-10 % La₂O₃, wobei (SiO₂+R₂O)/(La₂O₃+B₂O₃) 4-15 ist; Nb₂O₅/TiO₂ 1,2-3 ist; TiO2/(B₂O₃+Al₂O₃) 2-20 ist; und B₂O₃/ZnO 0-0,3 ist.

2. Optisches Glas aus schwerem Lanthanflint nach Anspruch 1, **dadurch gekennzeichnet, dass** seine Zusammensetzung in Gewichtsprozent angegeben ist und 15-30 % SiO₂; 5-15 % TiO₂; 9-18 % ZnO; 2-9 % ZrO₂; 0,05-1 % A1₂O₃; 10-25 % Nb₂O₅; 15-35 % BaO; 0-5 % SrO; 0-5 % CaO; 0-5 % MgO; 0-3 % Rn₂O, Rn₂O eines oder mehrere von Na₂O, K₂O und Li₂O ist; 0-5 % WO₃; 0-5 % Y₂O₃; und 0-1 % Sb₂O₃ umfasst.

3. Optisches Glas aus schwerem Lanthanflint nach einem der Ansprüche 1 oder 2, **dadurch gekennzeichnet, dass** (MgO+SrO+CaO)/BaO 0-0,3 ist; und (K₂O+Li₂O)/Na₂O 0-0, 6 ist.

4. Optisches Glas aus schwerem Lanthanflint nach Anspruch 1, **dadurch gekennzeichnet, dass** seine Zusammensetzung in Gewichtsprozent ausgedrückt ist und 15-30 % SiO₂; 0,5-4 % B₂O₃; 5-15 % TiO₂; 9-18 % ZnO; 2-9 % ZrO₂; 0,05-1 % Al₂O₃; 2-8 % La₂O₃; 10-25 % Nb₂O₅; und 15-35 % BaO umfasst.

5. Optisches Glas aus schwerem Lanthanflint nach Anspruch 4, **dadurch gekennzeichnet, dass** seine Zusammensetzung in Gewichtsprozent ausgedrückt ist und außerdem 0-5 % SrO; 0-5 % CaO; 0-5 % MgO; 0-3 % Rn₂O, wobei Rn₂O eines oder mehrere von Na₂O, K₂O und Li₂O ist; 0-5 % WO₃; 0-5 % Y₂O₃; und 0-1 % Sb₂O₃ umfasst.

6. Optisches Glas aus schwerem Lanthanflint nach einem der Ansprüche 1-5, **dadurch gekennzeichnet, dass** der Gesamtgehalt an SiO₂, B₂O₃, TiO₂, ZnO, ZrO₂, Al₂O₃, La₂O₃, Nb₂O₅ und RO, wobei RO eines oder mehrere von MgO, CaO, SrO und BaO ist, 95 % oder mehr beträgt.

7. Optisches Glas aus schwerem Lanthanflint nach einem der Ansprüche 4-6, **dadurch gekennzeichnet, dass** seine Zusammensetzung eine oder mehrere der folgenden 6 Bedingungen erfüllt:
1) (SiO₂+RO)/(La₂O₃+B₂O₃) 4-15 ist;
2) Nb₂O₅/TiO₂ 1,2-3 ist, vorzugsweise 1,3-2,5;
3) TiO₂/(B₂O₃+Al₂O₃) 2-20 ist, vorzugsweise 3-15;
4) B₂O₃/ZnO 0-0,3 ist;
5) (MgO+SrO+CaO)/BaO 0-0,3 ist; und
6) (K₂O+Li₂O)/Na₂O 0-0, 6 ist.

8. Optisches Glas aus schwerem Lanthanflint nach einem der Ansprüche 4-6, **dadurch gekennzeichnet, dass** seine Zusammensetzung eine oder mehrere der folgenden 6 Bedingungen erfüllt:
1) (SiO₂+RO)/ (La₂O₃+B₂O₃) 4,5-12 ist;
2) Nb₂O₅/TiO₂ 1,3-2 ist;
3) TiO₂/(B₂O₃+Al₂O₃) 3-15 ist;
4) B₂O₃/ZnO 0,02-0,2 ist;
5) (MgO+SrO+CaO)/BaO 0-0,2 ist; und
6) (K₂O+Li₂O)/Na₂O 0-0,4 ist.

9. Optisches Glas aus schwerem Lanthanflint nach einem der Ansprüche 4-6, **dadurch gekennzeichnet, dass** seine Zusammensetzung eine oder mehrere der folgenden 5 Bedingungen erfüllt:
1) (SiO₂+RO)/(La₂O₃+B₂O₃) 5-10 ist;
2) TiO₅/(B₂O₃+Al₂O₃) 4-10 ist;
3) B₂O₃/ZnO 0,05-0,15 ist;
4) (MgO+SrO+ CaO)/BaO 0-0,1 ist; und
5) (K₂O+Li₂O)/Na₂O 0-0,2 ist.

10. Optisches Glas aus schwerem Lanthanflint nach einem der Ansprüche 1-6, **dadurch gekennzeichnet, dass** das optische Glas aus schwerem Lanthanflint 17-28 % SiO₂ enthält; und/oder 0,5-4 % B₂O₃; und/oder 7-13 % TiO₂; und/oder 10-16 % ZnO; und/oder 3-8 % ZrO₂; und/oder 0,05-0,8 % Al₂O₃; und/oder 2-8 % La₂O₃; und/oder 11-24 % Nb₂O₅; und/oder 17-30 % BaO; und/oder 0-3 % SrO; und/oder 0-3 % CaO; und/oder 0-3 % MgO; und/oder 0-2 % Rn₂O, wobei Rn₂O eines oder mehrere von Na₂O, K₂O und Li₂O ist; und/oder 0-3 % WO₃; und/oder 0-3 % Y₂O₃; und/oder 0-0,5 % Sb₂O₃.

11. Optisches Glas aus schwerem Lanthanflint nach einem der Ansprüche 1-6, **dadurch gekennzeichnet, dass** das optische Glas aus schwerem Lanthanflint 20-26 % SiO₂; und/oder 0,7-2 % B₂O₃ enthält; und/oder 8-12 % TiO₂; und/oder 12-14 % ZnO; und/oder 4-8 % ZrO₂; und/oder 0,05-0,5 % Al₂O₃; und/oder 3-7 % La₂O₃; und/oder 13-20 % Nb₂O₅; und/oder 20-28 % BaO; und/oder 0-1 % Rn₂O, wobei Rn₂O eines oder mehrere von Na₂O, K₂O und Li₂O ist.

12. Optisches Glas aus schwerem Lanthanflint nach einem der Ansprüche 1-6, **dadurch gekennzeichnet, dass** das Glas einen Brechungsindex von 1,82-1,87 und eine Abbe-Zahl von 28-32 aufweist.

13. Optisches Glas aus schwerem Lanthanflint nach einem der Ansprüche 1-6, **dadurch gekennzeichnet, dass** die innere Durchlässigkeit τ₄₀₀ nm des Glases bei einer Wellenlänge von 400 nm größer oder gleich 75 % ist.

14. Glasvorform, **dadurch gekennzeichnet, dass** sie unter Verwendung des optischen Glases nach einem der Ansprüche 1-13 hergestellt wurde.

15. Optisches Element, **dadurch gekennzeichnet, dass** es unter Verwendung des optischen Glases nach einem der Ansprüche 1-13 hergestellt wurde.

16. Optisches Instrument, **dadurch gekennzeichnet, dass** es unter Verwendung des optischen Glases nach einem der Ansprüche 1-13 hergestellt wurde.

## Revendications

1. Verre optique flint à teneur élevée en lanthane, **caractérisé en ce que** la composition de celui-ci est exprimée en pourcentage en poids et comprend 15 à 30 % de SiO₂, 5 à 15 % de TiO₂, 9 à 18 % de ZnO, 10 à 25 % de Nb₂O₅, 0,05 à 1 % de Al₂O₃, RO qui est un ou plusieurs parmi 0 à 5 % de MgO, 0 à 5 % de CaO, 0 à 5 % de SrO et 15 à 35 % de BaO ; 0,5 à 5 % de B₂O₃, et 2 à 10 % de La₂O₃, dans lequel (SiO₂+RO)/(La₂O₃+B₂O₃) est de 4 à 15 ; Nb₂O₅/TiO₂ est de 1,2 à 3 ; TiO₂/(B₂O₃+Al₂O₃) est de 2 à 20 ; et B₂O₃/ZnO est de 0 à 0,3.

2. Verre optique flint à teneur élevée en lanthane selon la revendication 1, **caractérisé en ce que** la composition de celui-ci est exprimée en pourcentage en poids et comprend 15 à 30 % de SiO₂ ; 5 à 15 % de TiO₂ ; 9 à 18 % de ZnO ; 2 à 9 % de ZrO₂ ; 0,05 à 1 % de Al₂O₃ ; 10 à 25 % de Nb₂O₅ ; 15 à 35 % de BaO ; 0 à 5 % de SrO ; 0 à 5 % de CaO ; 0 à 5 % de MgO ; 0 à 3 % de Rn₂O, Rn₂O étant un ou plusieurs parmi Na₂O, K₂O et Li₂O ; 0 à 5 % de WO₃ ; 0 à 5 % de Y₂O₃ ; et 0 à 1 % de Sb₂O₃.

3. Verre optique flint à teneur élevée en lanthane selon l'une quelconque des revendications 1 ou 2, **caractérisé en ce que** (MgO+SrO+CaO)/BaO est 0 à 0,3 ; et (K₂O+Li₂O)/Na₂O est 0 à 0,6.

4. Verre optique flint à teneur élevée en lanthane selon la revendication 1, **caractérisé en ce que** la composition de celui-ci est exprimée en pourcentage en poids et comprend 15 à 30 % de SiO₂ ; 0,5 à 4 % de B₂O₃ ; 5 à 15 % de TiO₂ ; 9 à 18 % de ZnO ; 2 à 9 % de ZrO₂ ; 0,05 à 1 % de Al₂O₃ ; 2 à 8 % de La₂O₃ ; 10 à 25 % de Nb₂O₅ ; et 15 à 35 % de BaO.

5. Verre optique flint à teneur élevée en lanthane selon la revendication 4, **caractérisé en ce que** la composition de celui-ci est exprimée en pourcentage en poids et comprend en outre 0 à 5 % de SrO ; 0 à 5 % de CaO ; 0 à 5 % de MgO ; 0 à 3 % de Rn₂O, Rn₂O étant un ou plusieurs parmi Na₂O, K₂O et Li₂O ; 0 à 5 % de WO₃ ; 0 à 5 % de Y₂O₃ ; et 0 à 1 % de Sb₂O₃.

6. Verre optique flint à teneur élevée en lanthane selon l'une quelconque des revendications 1 à 5, **caractérisé en ce que** la teneur totale en SiO₂, B₂O₃, TiO₂, ZnO, ZrO₂, Al₂O₃, La₂O₃, Nb₂O₅ et RO, RO étant un ou plusieurs de MgO, CaO, SrO et BaO, est de 95 % ou plus.

7. Verre optique flint à teneur élevée en lanthane selon l'une quelconque des revendications 4 à 6, **caractérisé en ce que** la composition de celui-ci satisfait à une ou plusieurs des 6 conditions suivantes :
1) (SiO₂+RO)/(La₂O₃+B₂O₃) est de 4 à 15 ;
2) Nb₂O₅/TiO₂ est de 1,2 à 3, de préférence de 1,3 à 2,5 ;
3) TiO₂/(B₂O₃+Al₂O₃) est de 2 à 20, de préférence de 3 à 15 ;
4) B₂O₃/ZnO est de 0 à 0,3 ;
5) (MgO+SrO+CaO)/BaO est de 0 à 0,3 ; et
6) (K₂O+Li₂O)/Na₂O est de 0 à 0, 6.

8. Verre optique flint à teneur élevée en lanthane selon l'une quelconque des revendications 4 à 6, **caractérisé en ce que** la composition de celui-ci satisfait à une ou plusieurs des 6 conditions suivantes :
1) (SiO₂+RO)/(La₂O₃+B₂O₃) est de 4,5 à 12 ;
2) Nb₂O₅/TiO₂ est de 1,3 à 2 ;
3) TiO₂/(B₂O₃+Al₂O₃) est de 3 à 15 ;
4) B₂O₃/ZnO est de 0,02 à 0,2 ;
5) (MgO+SrO+CaO)/BaO est de 0 à 0,2 ; et
6) (K₂O+Li₂O)/Na₂O est de 0 à 0,4.

9. Verre optique flint à teneur élevée en lanthane selon l'une quelconque des revendications 4 à 6, **caractérisé en ce que** la composition de celui-ci satisfait à une ou plusieurs des 5 conditions suivantes :
1) (SiO₂+RO)/(La₂O₃+B₂O₃) est de 5 à 10 ;
2) TiO₂/(B₂O₃+Al₂O₃) est de 4 à 10 ;
3) B₂O₃/ZnO est de 0,05 à 0,15 ;
4) (MgO+SrO+CaO)/BaO est de 0 à 0,1 ; et
5) (K₂O+Li₂O)/Na₂O est de 0 à 0,2.

10. Verre optique flint à teneur élevée en lanthane selon l'une quelconque des revendications 1 à 6, **caractérisé en ce que** le verre optique flint à teneur élevée en lanthane présente 17 à 28 % de SiO₂ ; et/ou 0,5 à 4 % de B₂O₃ ; et/ou 7 à 13 % de TiO₂ ; et/ou 10 à 16 % de ZnO ; et/ou 3 à 8 % de ZrO₂ ; et/ou 0,05 à 0,8 % de Al₂O₃ ; et/ou 2 à 8 % de La₂O₃ ; et/ou 11 à 24 % de Nb₂O₅ ; et/ou 17 à 30 % de BaO ; et/ou 0 à 3 % de SrO ; et/ou 0 à 3 % de CaO ; et/ou 0 à 3 % de MgO ; et/ou 0 à 2 % de Rn₂O, Rn₂O étant un ou plusieurs parmi Na₂O, K₂O et Li₂O ; et/ou 0 à 3 % de WO₃ ; et/ou 0 à 3 % de Y₂O₃ ; et/ou 0 à 0,5 % de Sb₂O₃.

11. Verre optique flint à teneur élevée en lanthane selon l'une quelconque des revendications 1 à 6, **caractérisé en ce que** le verre optique flint à teneur élevée en lanthane présente 20 à 26 % de SiO₂ ; et/ou 0,7 à 2 % de B₂O₃ ; et/ou 8 à 12 % de TiO₂ ; et/ou 12 à 14 % de ZnO ; et/ou 4 à 8 % de ZrO₂ ; et/ou 0,05 à 0,5 % de Al₂O₃ ; et/ou 3 à 7 % de La₂O₃ ; et/ou 13 à 20 % de Nb₂O₅ ; et/ou 20 à 28 % de BaO ; et/ou 0 à 1 % de Rn₂O, Rn₂O étant un ou plusieurs parmi Na₂O, K₂O et Li₂O.

12. Verre optique flint à teneur élevée en lanthane selon l'une quelconque des revendications 1 à 6, **caractérisé en ce que** le verre présente un indice de réfraction de 1,82 à 1,87 et un nombre d'abbe de 28 à 32.

13. Verre optique flint à teneur élevée en lanthane selon l'une quelconque des revendications 1 à 6, **caractérisé en ce que** le facteur de transmission interne τ400 nm du verre à une longueur d'onde de 400 nm est supérieur ou égal à 75 %.

14. Préforme en verre, **caractérisée en ce qu'**elle est fabriquée en utilisant le verre optique selon l'une quelconque des revendications 1 à 13.

15. Élément optique, **caractérisé en ce qu'**il est fabriqué en utilisant le verre optique selon l'une quelconque des revendications 1 à 13.

16. Instrument optique, **caractérisé en ce qu'**il est fabriqué en utilisant le verre optique selon l'une quelconque des revendications 1 à 13.
